# EUROPEAN PATENT SPECIFICATION

(11) **EP 4 432 389 B1**
(45) Date of publication and mention of the grant of the patent: **22.10.2025**
(21) Application number: 23820064.6
(22) Date of filing: 05.06.2023
(51) Int. Cl.: H01M 4/13, H01M 4/36, H01M 50/46

(54) **ELECTRODE AND ELECTRODE ASSEMBLY**
ELEKTRODE UND ELEKTRODENANORDNUNG
ÉLECTRODE ET ENSEMBLE D'ÉLECTRODES

(30) Priority: 07.06.2022 KR 20220069164; 31.05.2023 KR 20230070307
(43) Date of publication of application: 18.09.2024
(73) Proprietor: LG Energy Solution, Ltd., Seoul 07335 (KR)
(72) Inventor: JUN, Youngjin, Daejeon 34122 (KR); KIM, Minkyung, Daejeon 34122 (KR); KIM, Hyosik, Daejeon 34122 (KR); JUNG, Hyeri, Daejeon 34122 (KR); YOON, Jong Keon, Daejeon 34122 (KR); SOON, Jiyong, Daejeon 34122 (KR); KANG, Sungjoong, Daejeon 34122 (KR); KIM, Dong Kyu, Daejeon 34122 (KR)
(74) Representative: Goddar, Heinz J.
(86) International application number: PCT/KR2023/007665
(87) International publication number: WO 2023/239128

(56) References cited:
- WO-A1-2020/246497
- KR-A- 20130 103 946
- KR-A- 20180 112 890
- KR-B1- 101 967 975
- KR-B1- 102 104 689
- US-A1- 2018 277 832
- US-A1- 2019 341 606

## Description

### [TECHNICAL FIELD]

### Cross Citation with Related Application(s)

This application claims the benefits of Korean Patent Application No. 10-2022-0069164 filed on June 7, 2022 and Korean Patent Application No. 10-2023-0070307 filed on May 31, 2023 in the Korean Intellectual Property Office.

The present invention relates to an electrode that can improve high-temperature safety and life characteristic of lithium secondary batteries, and an electrode assembly including the same.

### [BACKGROUND]

As the development of a technology and the demand for an electric vehicle and an energy storage system (ESS) have increased, the demand for a battery as an energy source has rapidly increased, and accordingly, various research into batteries capable of satisfying various needs has been carried out. Particularly, as a power source for such devices, research into lithium secondary batteries having excellent life and cycle characteristics as well as high energy density has been actively conducted.

Generally, a lithium secondary battery includes a positive electrode, a negative electrode, a separator interposed between the positive electrode and the negative electrode, an electrolyte, and the like. Since the positive electrode can generate oxygen due to its unstable structure in a charged state, and there is a high danger of ignition when oxygen is generated, attempts has been made to research and develop a method capable of enhancing the safety of lithium secondary batteries.

A separator is used to ensure electrical insulation between a positive electrode and a negative electrode, and a thin film made of polyolefin is generally used.However, a polyolefin-based separator can easily shrink in high temperature environments and thus fail to insulate between a positive electrode and a negative electrode. When electrical insulation between the positive electrode and the negative electrode becomes impossible, a short circuit may occur, which may interact with oxygen generated by the unstable positive electrode to cause ignition. In other words, when a short circuit occurs in a charged lithium secondary battery in a high-temperature environment, there is a problem that the lithium secondary battery ignites.

Therefore, there is a demand to develop a technique relating to a method capable of enhancing the high-temperature safety of a lithium secondary battery.

An example of an electrode having a safety coating layer addressing such problems may be found in Patent Literature US 2018/277832 A1.

### [DETAILED DESCRIPTION OF THE INVENTION]

### [Technical Problem]

The present invention provides an electrode that improves high-temperature safety and life characteristic of a lithium secondary battery by forming a coating layer that replaces or assists a separator, and an electrode assembly including the same.

### [Technical Solution]

According to one embodiment of the present invention, there is provided an electrode comprising: an electrode active material layer and a coating layer formed on the electrode active material layer, wherein: the coating layer includes polymer particles having an absolute value of zeta potential of 25 mV or more; a dispersant; and a binder, the binder includes at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and the binder is contained in an amount of 12 to 32 wt.% based on the total weight of the coating layer.

According to another embodiment of the present invention, there is provided an electrode assembly comprising: a first electrode; a second electrode; and a coating layer arranged between the first electrode and the second electrode, wherein the coating layer includes polymer particles having an absolute value of zeta potential of 25 mV or more; a dispersant; and a binder, wherein the binder includes at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and wherein the binder is contained in an amount of 12 to 32 wt.% based on the total weight of the coating layer.

### [Advantageous Effects]

The electrode and the electrode assembly according to the present inventionare configured to form a coating layer having a predetermined composition, which replaces or assists the existing separator, on the electrode, thereby securing electrical insulation between two electrodes.

As a result of experiments, the present inventors have found that as the composition of the coating layer is optimized, damage such as cracks in the coating layer is remarkably reduced. Therefore, when charging the lithium secondary battery including the electrode assembly, a microshort circuit between the positive electrode and the negative electrodes that can occur due to local deflection of lithium ions into cracks in the coating layer can be prevented, and as a result, the time required to charge the battery can be shortened, and the safety of the battery can be improved.

Further, the electrode and electrode assembly including the coating layer can suppress the occurrence of a short circuit due to shrinkage of an existing separator, and can reduce ignition due to high temperature, external impact, or the like. In particular, the coating layer has excellent adhesive force to the active material layer than a polyolefin-based substrate of the existing separator, and polymer particles contained in the coating layer may have a higher melting point than the polyolefin-based substrate. Therefore, as the existing separator is replaced or assisted by such a coating layer, the coating layer does not easily shrink even in high temperature environments and can prevent a shortcircuit between electrodes, thereby improving high-temperature safety of the battery.

In addition, when a flame retardant electrolyte is used to ensure the high-temperature safety of a lithium secondary battery,the coating layer can exhibit a higher impregnation property of the flame retardant electrolyte than the polyolefin-based substrate of the existing separator, thereby ensuring high lithium ion mobility along with excellent safety.

Therefore, the electrode and the electrode assembly according to the present invention can remarkably contribute to achieving electrochemical characteristics such as improved life characteristic as well as excellent high-temperature stability of a lithium secondary battery.

### [BRIEF DESCRIPTION OF THE DRAWINGS]

FIG. 1 is a photograph of the surface of the coating layer in the electrode manufactured in Example 1;
FIG. 2 is a photograph of the surface of the coating layer in the electrode manufactured in Example 2;
FIG. 3 is a photograph of the surface of the coating layer in the electrode manufactured in Comparative Example 1;
FIG. 4 is a photograph of the surface of the coating layer in the electrode manufactured in Comparative Example 2; and
FIG. 5 is a graph showing capacity retentions of the lithium secondary batteries including the electrodes manufactured in Examples 1 and 2, respectively.

### [DETAILED DESCRIPTION OF THE EMBODIMENTS]

Unless defined otherwise, all terms (including technical and scientific terms) used in the present specification may be used as meanings that can be commonly understood by those of ordinary skill in the art to which the present invention belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the specification, unless explicitly described to the contrary, the word "comprise" and variations such as "comprises" or "comprising" will be understood to imply the inclusion of stated elements but not the exclusion of any other elements.

The term "and/or" as used in a phrase such as "A and/or B" herein is intended to include "A" (alone), or "B" (alone), or "both A and B,".

As used herein, the term "%" means wt.% unless explicitly indicated otherwise.

As used herein, the D₅₀ means particle sizes at which cumulative volumes of particles reach 50% in the particle size distribution curve of the particles. The D₅₀ can be measured using, for example, a laser diffraction method. The laser diffraction method can generally measure particle sizes ranging from a submicron range to several millimeters, and can obtain results with high reproducibility and high resolvability.

The expression "specific surface area" in the present specification is measured by a BET (Brunauer-Emmett-Teller) method, wherein, specifically, the specific surface area may be calculated from a nitrogen gas adsorption amount at a liquid nitrogen temperature (77K) using BELSORP-mini II by BEL Japan Inc.

As used herein, the " ζ potential (zeta potential)" is the index indicating the degree of surface charge of the particles.The zeta potential of particles in the present invention can be measured, for example, by an electrophoretic light scattering method using a dynamic light scattering device. Specifically, the zeta potential value of the particles can be measured by an electrophoretic light scattering method after the polymer particles are dispersed in water or an alcohol-based solvent without a dispersant,

Now, an electrode and an electrode assembly according to embodiments of the present invention will be described in detail.

### <Electrode>

An electrode according to an embodiment of the present invention comprises an electrode active material layer and a coating layer formed on the electrode active material layer, wherein: the coating layer includes polymer particles having an absolute value of zeta potential of 25 mV or more; a dispersant; and a binder, the binder includes at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and the binder is contained in an amount of 12 to 32 wt.% based on the total weight of the coating layer.

It is known that an existing separator made of a polyolefin-based material easily thermally shrinks at a high temperature, thereby causing a short circuit between the positive electrode and the negative electrode, which deteriorates high-temperature safety of a lithium secondary battery.

The electrode of one embodiment is configured such that a coating layer that replaces or assists such an existing separator is formed on the electrode active material layer, wherein the coating layer includes a certain type and content of binder, and polymer particles satisfying a certain range of zeta potential, and the like.

The absolute value of the zeta potential can define the surface polarity of the polymer particles, and having an absolute value equal to or more than a prescribed level may mean that the surface polarity increases. It was confirmed that as the polymer particles having a high surface polarity are combined with a binder having a specific composition in this way, not only the coating layer not only exhibits porosity replacing the separator, excellent coating properties and surface properties, but also the occurrence of cracks in the coating layer does not appear substantially.

Further, the polymer particles may have a relatively high melting point. Thus, when a coating layer including the same is applied, a short circuit due to shrinkage of an existing separator can be suppressed, and a lithium secondary battery exhibiting improved high-temperature safety can be provided. Furthermore, it was confirmed that by adjusting the content range of the binder in the coating layer and the content range of polymer particles excluding the same, the capacity retention and life characteristic of the lithium secondary battery can be further improved.

In addition, the coating layer can improve the impregnation property of aflame retardant electrolyte, which will be described later, compared to the existing separator. This appears to be because the flame retardant electrolyte has a relatively high polarity compared to the existing electrolyte. Therefore, by combining the electrode of the one embodiment with a flame retardant electrolyte, high lithium ion mobility through the coating layer can be ensured while further improving the safety of the lithium secondary battery, thereby further improving electrochemical properties of the battery.

In the electrode of the one embodiment, the coating layer may be formed on an electrode active material layer, which will be described below. For example, the coating layer may be formed on a positive active material layer or a negative active material layer.

The polymer particles in such a coating layer may be particles having a surface charge, and the surface charge and surface polarity may be defined by an absolute value range of its zeta potential. Specifically, the zeta potential is a physical property that defines the electrostatic repulsive force or dispersibility between particles. The polymer particles having a large absolute value of the zeta potential can be uniformly dispersed on the electrode to exhibit satisfactory and uniform coating properties, and a large number of fine and uniform pores that allow lithium ions to pass between these particles can be defined. In addition, due to the particles satisfying such a zeta potential, the porous coating layer can exhibit excellent impregnation property for a flame retardant electrolyte containing a flame retardant solvent.

The zeta potential of the polymer particles can be measured, for example, by an electrophoretic light scattering method using a dynamic light scattering device. At this time, the zeta potential of the polymer particles can be measured in a state where the particles are dispersed in water or an alcohol-based solvent without a separate dispersant. In specific examples, the zeta potential can be measured in a state in which the polymer particles are dispersed at a concentration of 0.1wt.% or less in a water solvent.

The absolute value of the zeta potential of the polymer particles may be 25 mV or more, or 35 mV or more, or 45 mV or more, and 100 mV or less, or 90 mV or less, or 80 mV or less. When the absolute value of the zeta potential satisfies the above range, the flame retardant electrolyte can be easily impregnated into the coating layer, so that a uniform reaction can occur throughout the electrode, and thus, various performances such as capacity, output, and life characteristics of the lithium secondary battery can be improved.

Specific examples of the polymer particles include at least one selected from the group consisting of polyethylene oxide (PEO), polyphenylene sulfide (PPS), polyalkyl(meth)acrylate such as polymethyl(meth)acrylate (PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate, but are not limited thereto.

The zeta potential of the polymer particles can be adjusted not only by the type of each particle, but also by the particle size or surface properties of these particles. Thus, in order to achieve the zeta potential of the polymer particles, the appropriate porosity of the dispersive or porous coating layer, and the like, the polymer particles may have an average particle size D₅₀ of 50 nm to 3 *µ*m, 50 nm to 2 *µ*m, or 100 nm to 1.5 *µ*m.

When the average particle size D₅₀ of the polymer particles is smaller than 50 nm, aggregation between particles occurs due to a decrease in the dispersibility of the particles, and pores are clogged due to the aggregated particles, which makes it difficult to form a coating layer having a porous structure. When the particle size is larger than 3 *µ*m, there is a problem that the pore structure is simplified in the porous structure in the coating layer, and thus lithium dendrite is generated when manufacturing the cells.

In addition, in order to control the surface properties of the polymer particles and thereby adjust the zeta potential, and the like, the polymer particles may be contained in the coating layer in a state of being surface-treated with oxygen plasma or ion beam.

The above-mentioned polymer particles may be contained in an amount of 55 wt.% to 85 wt.%, or 55 wt.% to 80 wt.%, or 65 wt.% to 75 wt.% based on the total weight of the coating layer. When the content of the polymer particles satisfies the above range, the dispersibility of the particles contained in the coating layer is improved and pores are uniformly formed in the coating layer, so that cracks on the surface of the coating layer can be remarkably reduced.

Meanwhile, the dispersant suppresses a phenomenon in which the polymer particles are excessively aggregated in the coating layer, and enables the polymer particles to be effectively dispersed and present in the coating layer.

Such a dispersant may include a hydrogenated nitrile-based polymer. Specifically, the dispersant may be a hydrogenated nitrile-based copolymer, and more specifically, a hydrogenated nitrile butadiene rubber (H-NBR).

The hydrogenated nitrile-based copolymer may be a copolymer containing a structural unit derived from α,β-unsaturated nitrile and a structural unit derived from a hydrogenated conjugated diene, or may be a copolymer containing a structural unit derived from α,β-unsaturated nitrile, a structural unit derived from a conjugated diene, and a structural unit derived from a hydrogenated conjugated diene. Specifically, the hydrogenated nitrile-based copolymer may be a hydrogenated nitrile-based copolymer in which all of the structural units derived from the conjugated diene are hydrogenated and the structural units derived from the conjugated diene are not contained. Unlike the same, the hydrogenated nitrile-based copolymer may also be a partially hydrogenated nitrile-based copolymer in which a part of the structural units derived from the conjugated diene is hydrogenated and the structural units derived from the hydrogenated conjugated diene are contained together with the structural units derived from the conjugated diene.

The method for hydrogenating the conjugated diene can be carried out by a hydrogenation reaction known in the art, for example, a catalytic hydrogenation reaction using a catalyst system such as Rh, Ru, Pd, Ir, and the hydrogenation rate can be adjusted by adjusting the amount of catalyst, reaction hydrogen pressure, reaction time and the like.

The hydrogenated nitrile-based copolymer can be prepared by copolymerizing an α,β-unsaturated nitrile monomer and a conjugated diene-based monomer, and then hydrogenating the C=C double bond in the copolymer. Polymerization and hydrogenation of the monomers can be carried out according to conventional methods.

As the α,β-unsaturated nitrile monomer, for example, acrylonitrile, methacrylonitrile, or the like may be used, and any one alone or a mixture of two or more thereof may be used. As the conjugated diene-based monomer, for example, conjugated diene-based monomers having 4 to 6 carbon atoms such as 1,3-butadiene, isoprene, or 2,3-methyl butadiene may be used, and any one alone or a mixture of two or more thereof may be used.

The α,β-unsaturated nitrile-derived structural unit may be contained in the hydrogenated nitrile-based copolymer in an amount of 20 wt.% to 50 wt.%, or 30 wt.% to 40 wt.%. When the above range is satisfied, the affinity between the hydrogenated nitrile-based copolymer and an organic solvent (e.g., N-methyl-2-pyrrolidone (NMP)) as a medium for forming a coating layer is at an appropriate level, so that dispersion of the polymer particles in the composition for forming the coating layer can be more easily achieved. Accordingly, pores are uniformly formed in the coating layer, and cracks on the surface of the coating layer can be remarkably reduced.

The hydrogenated nitrile-based copolymer may have a weight average molecular weight of 5,000 g/mol to 700,000 g/mol, or 5,000 g/mol to 600,000 g/mol, or 10,000 g/mol to 500,000 g/mol. When the weight average molecular weight of the hydrogenated acrylonitrile-butadiene rubber (H-NBR) satisfies the above numerical range, the polymer particles can be uniformly dispersed in the coating layer.

The above-mentioned dispersant may be contained in an amount of 3 wt.% to 20 wt.%, or 5 wt.% to 20 wt. %, or 5 wt.% to 15 wt.% based on the total weight of the coating layer. When the content of the dispersant satisfies the above range, the dispersibility of the particles contained in the coating layer is improved and pores are uniformly formed in the coating layer, so that cracks on the surface of the coating layer can be remarkably reduced.

Meanwhile, the binder contained in the coating layer serves to improve the adhesion between the above-mentioned polymer particles and the coating layer, and the electrode active material layer.

The binder may include at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and may not include at least one selected from the group consisting of polytetrafluoroethylene (PTFE), carboxymethylcellulose (CMC), styrene-butadiene rubber (SBR), and fluororubber. When the type of binder satisfies the above conditions, the coating layer having excellent adhesive force is formed on the electrode surface, and thereby damage such as cracks on the surface of the coating layer can be remarkably reduced.

The binder may be contained in an amount of 12 wt.% to 32 wt.%, or 12 wt.% to 28 wt.%, or 15 wt.% to 28 wt.%, or 15 wt.% to 25 wt.%, based on the total weight of the coating layer. When the content of the binder is less than 12 wt.% based on the total weight of the coating layer, there is a problem that the adhesion between the polymer particles and the electrode active material layer is reduced so that the coating layer is detached from the electrode active material layer, and damage such as cracks occurs in the coating layer. In addition, when the content of the binder exceeds 32 wt.% based on the total weight of the coating layer, there is a problem that the resistance of the coating layer increases due to an increase in the binder content, thereby increasing the cell resistance and degrading the life performance of the cell.

From the viewpoint that the coating layer described above exhibits excellent impregnation properties with the flame-retardant electrolyte, effectively replaces the role of the separator and reduces the resistance of the coating layer, the coating layer can have a thickness of 5 to 50 *µ*m, or 10 to 45 *µ*m, or 15 to 40 *µ*m, and include a plurality of pores having a diameter of 10 nm or more, or 20 nm to 3 *µ*m, or 50 nm to 1 *µ*m. At this time, the thickness of the coating layer may mean the total thickness of the coating layer formed on the positive electrode and/or the negative electrode.

The above-mentioned coating layer may have electrical insulating properties. In this case, the coating layer may correspond to a porous insulating layer, but is not limited thereto.

Further, the coating layer has a property that does not easily shrink even at high temperatures. Therefore, when an electrode assembly is formed by stacking one or more electrodes including the coating layer without a separate separator, a short circuit between the positive electrode and the negative electrode can be prevented even in a high-temperature environment, thereby improving high-temperature safety of the electrode assembly.

In the electrode of one embodiment described above, the coating layer formed on the electrode active material layer may have excellent surface quality with remarkably reduced damage such as cracks. Therefore, when an electrode assembly is formed by stacking one or more electrodes including the coating layer without a separate separator, and a lithium secondary battery is manufactured from the electrode assembly, a microshort circuit phenomenon between the positive electrode and the negative electrode can be prevented.

According to one embodiment, the coating layer may be formed by coating and drying a composition for forming an electrode coating layer on an electrode active material layer.

In this case, the solid content of the composition for forming the electrode coating layer may be 19 wt.% to 25 wt.%, or 19 wt.% to 23 wt. %, or 19 wt.% to 21 wt.%.At this time, the solid content is the total content of the components including the above-mentioned polymer particles, binder, and dispersant, and can be defined as the content excluding a liquid media such as an organic solvent for dissolving or dispersing these components. When the solid content of the composition for forming the electrode coating layer satisfies the above numerical range, the composition for forming an electrode coating layer may have a viscosity at a level capable of being coated on an electrode active material layer.

Specifically, the composition for forming the electrode coating layer may have a viscosity of 5000 cP to 7000 cP, or 5000 cP to 6800 cP, or 5500 cP to 6800 cP at 25°C. When the viscosity of the composition for forming an electrode coating layer satisfies the above numerical range, the composition for forming an electrode coating layer can be coated to have a uniform thickness on the electrode active material layer.

Meanwhile, in the electrode of the one embodiment, the electrode active material layer may be formed on the electrode current collector. The above-mentioned coating layer may be formed on the electrode active material layer, and the electrode active material layer and the coating layer may be formed in contact with each other without interposition of another layer.

When the electrode of the one embodiment is a positive electrode, the positive electrode may include a positive electrode current collector, a positive electrode active material layer formed on the positive electrode current collector, and a coating layer formed on the positive electrode active material layer.

At this time, the positive electrode current collector is not particularly limited as long as it has conductivity without causing a chemical change in the battery. For example, the current collector may be formed of stainless steel, aluminum, nickel, titanium, calcinated carbon, or aluminum, or aluminum or stainless steel that is surface-treated with carbon, nickel, titanium, silver, or the like. Such a positive electrode current collector may have a thickness of 3 *µ*m to 500 *µ*m, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

In addition, the positive electrode active material layer may include a positive electrode active material, and may optionally further include a conductive material, a binder, and the like.

The positive electrode active material may be a material capable of reversibly intercalating and deintercalating lithium, wherein the positive electrode active material may particularly include a lithium metal oxide containing lithium and at least one metal such as cobalt, manganese, nickel or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like, and any one thereof or a compound of two or more thereof may be used.

Among these materials, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂,Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), or lithium iron phosphate (e.g., LiFePO₄) or the like, and any one alone or a mixture of two or more thereof may be used.

The positive electrode active material may be contained in an amount of 60 to 99 wt.%, or 70 to 99 wt.%, or 80 to 98 wt.% based on the total weight of the positive electrode active material layer.

The conductive material is a component that further improves the conductivity of the positive electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

Typically, the conductive material may be contained in an amount of 1 to 20 wt.%, or 1 to 15 wt.%, or 1 to 10 wt.% based on the total weight of the positive electrode active material layer.

Further, the binder is a component that assists in the binding between the active material and the conductive agent and in the binding with the positive electrode current collector.

Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene polymer, a sulfonated ethylene-propylene-diene polymer, a styrene-butadiene rubber, a fluoro rubber, various copolymers, and the like.

Typically, the binder may be contained in an amount of 1 to 20 wt.%, or 1 to 15 wt.%, or 1 to 10 wt.% based on the total weight of the positive electrode active material layer.

Meanwhile, when the electrode of the one embodiment is a negative electrode, the negative electrode may include a negative electrode current collector, a negative electrode active material layer formed on the negative electrode current collector, and a coating layer formed on the negative electrode active material layer. Alternatively, the negative electrode may include a graphite electrode made of carbon (C) and a coating layer formed on the graphite electrode. Alternatively, the negative electrode may include a metal itself and a coating layer formed on the metal.

The negative electrode current collector is not particularly limited as long as it has high conductivity without causing a chemical change in the battery, and, for example, copper, stainless steel, aluminum, nickel, titanium, calcinated carbon, copper or stainless steel that is surface-treated with one of carbon, nickel, titanium, silver, or the like, an aluminum-cadmium alloy, or the like may be used. The negative electrode collector may generally have a thickness of 3 *µ*m to 500 *µ*m. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

Further, the negative electrode active material layer may include a negative electrode active material, and may optionally further include a conductive material, a binder, and the like.

The negative electrode active material may comprise at least one selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂0O₅, GeO, GeO₂, Bi₂O₃, Bi₂O₄, Bi₂O₅, LiₓFe₂O₃(0≤x≤1), LiₓWO₂(0≤x≤1) and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) can be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, lithium vanadium oxide, and the like.

The negative electrode active material may be contained in an amount of 60 to 99 wt.%, or 70 to 99 wt. %, or 80 to 98 wt.% based on a total weight of the negative electrode active material layer.

Further, the conductive material is a component that further improves the conductivity of the negative electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

The conductive material may be contained in an amount of 1 to 20 wt.%, or 1 to 15 wt.%, or 1 to 10 wt.% based on the total weight of the positive electrode active material layer.

Further, the binder is a component that assists in the binding between the active material and the conductive agent and in the binding with the negative electrode current collector.

Examples of the binder may include polyvinylidenefluoride (PVDF), polyvinyl alcohol, carboxymethylcellulose (CMC), starch, hydroxypropylcellulose, regenerated cellulose, polyvinylpyrrolidone, polyethylene, polypropylene, ethylene-propylene-diene polymer, and a sulfonated ethylene-propylene-diene polymer, a styrene-butadiene rubber, a fluoro rubber, various copolymers thereof, and the like.

Typically, the binder may be contained in an amount of 1 to 20 wt.%, or 1 to 15 wt.%, or 1 to 10 wt.% based on the total weight of the negative electrode active material layer.

When the metal itself is used without forming a negative electrode active material layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium (Li), nickel (Ni), tin (Sn), copper (Cu), and indium (In), or an alloy of two types thereof.

### <Electrode Assembly>

Meanwhile, an electrode assembly according to other embodiments of the invention includes the electrode of one embodiment mentioned above. The electrode assembly of such other embodiments include a first electrode, a second electrode, and a coating layer arranged between the first electrode and the second electrode, wherein the coating layer includes polymer particles, a dispersant, and a binder, wherein the binder includes at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and wherein the binder is contained in an amount of 12 to 32 wt.% based on the total weight of the coating layer.

The electrode assembly of the other embodiments may not include an existing polyolefin-based separator. Specifically, the electrode assembly can include a coating layer as described with respect to the electrodes of one embodiment arranged between the first electrode and the second electrode without including the existing separator. For example, the first electrode and the second electrode may be formed to contact the coating layer, and a separate layer may not be interposed between the first and second electrodes and the coating layer.

Each of the first electrode and the second electrode may be a positive electrode or a negative electrode. For example, when the first electrode is a positive electrode, the second electrode is a negative electrode, and when the first electrode is a negative electrode, the second electrode may be a positive electrode. In this case, the positive electrode and the negative electrode are each as described above.

The electrode assembly of the other embodiment includes a negative electrode, and a positive electrode on which no coating layer is formed along with a coating layer formed on the negative electrode, or may include a positive electrode, and a negative electrode on which no coating layer is formed along with a coating layer formed on the positive electrode.

Alternatively, the electrode assembly may have a form in which a coating layer formed on the negative electrode and a coating layer formed on the positive electrode are arranged in contact with each other. In this case, an excellent effect can be achieved in that stable charging and discharging can be carried out by improving electrical insulation.

### <Lithium Secondary Battery>

A lithium secondary battery including the electrode assembly described above will be described.

Such a lithium secondary battery may include an electrode assembly and a flame retardant electrolyte. In this case, the electrode assembly is as described above.

At this time, the flame retardant electrolyte may be defined as including a flame retardant solvent having a flash point of 100°C or more or having no flash point, and a lithium salt. At this time, the flame retardant solvent may encompass a substantially non-flammable organic solvent having no flash point, and an organic solvent having a high flash point of 100°C or more, or 100 to 250°C, or 110 to 200°C, and a low volatility. The lithium secondary battery comprises a flame retardant electrolyte including such a flame retardant solvent and a lithium salt and thereby can exhibit excellent high-temperature stability. Moreover, since the flame retardant electrolyte can be uniformly impregnated into the coating layer including the polymer particles, various electrochemical characteristics of the lithium secondary battery can be achieved excellently. The flash point defining the flame retardant solvent can be measured using either a closed tester or open tester according to the standard methods of ASTM D93 or ASTM D1310.

In specific examples, the flame retardant solvent may be an organic solvent having a functional group selected from the group consisting of a functional group that can contribute to low volatility and flame retardancy or non-flammability of organic solvents, for example, fluorine-containing functional groups such as sulfone-based functional groups and fluorine-substituted hydrocarbon groups, and phosphorus-containing functional groups such as phosphate groups or phosphonate groups, and nitrile-based functional groups, and one or more of such organic solvents can be mixed and used. More specifically, the flame retardant solvent may include at least one organic solvent selected from the group consisting of a sulfone-based compound, a nitrile-based compound, a phosphoric acid-based compound and a fluorine-substituted carbonate-based compound.

Among them, the sulfone-based compound may include at least one selected from the group consisting of a cyclic sulfone-based compound or a linear sulfone-based compound, and specifically, the sulfone-based compound may include at least one selected from the group consisting of sulfolane, ethylmethyl sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

Further, the nitrile-based compound may include at least one selected from the group consisting of malononitrile, succinonitrile, glutaronitrile, adiponitrile, suberonitrile, and sebaconitrile.

Further, the phosphoric acid-based compound may include at least one selected from the group consisting of dimethyl methylphosphate, trimethyl phosphate, triethyl phosphate, tributyl phosphate, diethyl ethyl phosphate, dimethyl methyl phosphate, dimethyl(2-methoxyethoxy)methylphosphonate, diethyl(2-methoxyethoxy)methylphosphonate, and triphenyl phosphate.

Additionally, the fluorine-substituted carbonate-based compound may include at least one selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 2,2,2-trifluoroethyl-N,N-dimethyl carbonate, hexafluoro-i-propyl-N,N-dimethyl carbonate, 4-(2,2,3,3-tetrafluoropropoxymethyl)-[1,3]-dioxolan-2-one, and bis(2,2,3,3-pentafluoro-propyl)carbonate.

Meanwhile, the lithium salt included in the flame retardant electrolyte is used as a medium for transferring ions in a lithium secondary battery. The lithium salt may include, for example, Li⁺ as a cation, and may comprise at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single material selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂), or a mixture of two or more thereof, but it is preferable to include LiN(SO₂CF₃)₂ for the viewpoint of excellent stability.

In addition to these, the lithium salt commonly used in an electrolyte of a lithium secondary battery can be used without particular limitation.

The concentration of the lithium salt can be changed as appropriate within a generally usable range, but the lithium salt may be included in the flame retardant electrolyte at a concentration of 0.5M to 6M, 1M to 3M, or 1M to 2.5M in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

The above-mentioned lithium secondary battery can be manufactured by disposing a coating layer between a positive electrode and a negative electrode to form an electrode assembly, inserting the electrode assembly into a cylindrical battery case or a prismatic battery case, and then injecting the above-mentioned flame retardant electrolyte. Alternatively, the lithium secondary battery can be manufactured by stacking the electrode assemblies, impregnating them with a flame retardant electrolyte, and putting the resulting product into a battery case and sealing the case.

The battery case may be one commonly used in the art, and the outer shape according to the application use of the battery is not limited. For example, the battery case may be a cylindrical type, a prismatic type, a pouch type, a coin type, and the like, but is not limited thereto.

The above-mentioned lithium secondary battery can be used not only as a battery cell used as a power source for a small-sized device, but also preferably as a unit battery for a medium- or large-sized battery module including a plurality of battery cells. Preferable examples of the medium-sized or large-sized device include an electric vehicle, a hybrid electric vehicle, a plug-in hybrid electric vehicle, and an energy storage system (ESS).

### Example and Comparative Example

First, in the following examples, the zeta potential of polymer particles was measured by an electrophoretic light scattering method using a dynamic light scattering device (product name: ELS-Z), in a state in which the polymer particles were dispersed at a concentration of 0.1 wt.% or less in a water solvent at a temperature of 25°C.

Also, the flash point of the (flame retardant) organic solvent contained in the (flame retardant) electrolyte was measured by a closed tester according to the standard method of ASTM D93. Specifically, a sample container was filled with an organic solvent sample, the container was covered and closed with a lid, and then the sample container was heated at a constant rate according to the above standard method. During heating, the sample container was periodically opened to check whether a flame is generated, and the temperature at the time point of flame generation was measured as the flash point.

### Example 1

### (1) Preparation of Composition for Forming Electrode Coating Layer

Polymethyl methacrylate (PMMA) polymer particles having a zeta potential of -50 mV and an average particle size D₅₀ of 1 *µ*m, a hydrogenated nitrile rubber (H-NBR) dispersant, and a polyvinylidene fluoride (PVDF) binder were put and dispersed in a weight ratio of 7: 1: 2 in N-methyl-2-pyrrolidone (NMP) solvent to prepare a composition for forming an electrode coating layer. At this time, the composition for forming the electrode coating layer had a solid content of 21 wt.%, and a viscosity of 6000 cP at 25°C.

### (2) Manufacture of Negative Electrode

Next, a copper (Cu) metal thin film with a thickness of 20 *µ*m was prepared as a negative electrode current collector, and a 55 *µ*m negative electrode active material layer containing artificial graphite as a negative electrode active material was formed on one surface of the copper metal thin film. Then, the composition for forming an electrode coating layer was coated onto the negative electrode active material layer, and dried to form a coating layer with a thickness of 30 *µ*m on the negative electrode active material layer, thereby manufacturing a negative electrode.

### (3) Manufacture of Lithium Secondary Battery

A 60 *µ*m positive electrode containing Li(Ni_{0.8}Mn_{0.1}Co_{0.1})O₂ was prepared as a positive electrode active material.

The coating layer of the negative electrode prepared by the above method and the positive electrode were arranged in contact with each other to prepare an electrode assembly.

Li(N(SO₂CF₃)₂(LiFSI) was dissolved at a concentration of 1.5 M in a flame retardant solvent sulfolane (flash point: about 165°C) to prepare a flame retardant electrolyte. A lithium secondary battery was manufactured by housing the electrode assembly in a battery case and then injecting a flame retardant electrolyte therein.

### Example 2

A composition for forming an electrode coating layer was prepared in the same manner as in Example 1, except that polymethyl methacrylate (PMMA) polymer particles having a zeta potential of -50 mV and an average particle size D₅₀ of 1 *µ*m, a hydrogenated nitrile rubber (H-NBR) dispersant, and a polyvinylidene fluoride (PVDF) binder was put and dispersed in a weight ratio is 6:1:3 in N-methyl-2-pyrrolidone (NMP) solvent to prepare the composition for forming the electrode coating layer. At this time, the composition for forming the electrode coating layer had a solid content of 21 wt.%, and a viscosity of 6200 cP at 25°C.

A negative electrode and a lithium secondary battery were manufactured in the same manner as in Example 1, except that the composition for forming the electrode coating layer was used.

### Comparative Example 1

A composition for forming an electrode coating layer was prepared in the same manner as in Example 1, except that a hydrogenated nitrile rubber (H-NBR) dispersant was not used, and the polymethyl methacrylate (PMMA) polymer particles and a polyvinylidene fluoride (PVDF) binder were mixed in a weight ratio of 9: 1. At this time, the composition for forming the electrode coating layer had a solid content of 21 wt.%, and a viscosity of 6500 cP at 25°C.

A negative electrode and a lithium secondary battery were manufactured in the same manner as in Example 1, except that the composition for forming the electrode coating layer was used.

### Comparative Example 2

A composition for forming an electrode coating layer was prepared in the same manner as in Example 1, except that polytetrafluoroethylene (PTFE) was used as a binder. At this time, the composition for forming the electrode coating layer had a solid content of 21 wt.%, and a viscosity of 6600 cP at 25°C.

A negative electrode and a lithium secondary battery were manufactured in the same manner as in Example 1, except that the composition for forming the electrode coating layer was used.

### Comparative Example 3

### (1) Manufacture of Negative Electrode

A negative electrode was manufactured in the same manner as in Example 1, except that unlike Example 1, the coating layer was not formed on the negative electrode active material layer.

### (2) Manufacture of Lithium Secondary Battery

A 60 *µ*m positive electrode containing Li(Ni_{0.8}Mn_{0.1}Co_{0.1})O₂ was prepared as a positive electrode active material.

A lithium secondary battery was manufactured in the same manner as in Example 1, except that a separator made of polyolefin was interposed between the prepared negative electrode and the positive electrode to manufacture an electrode assembly.

### Experimental Example 1 - Evaluation of coating properties of the coating layer

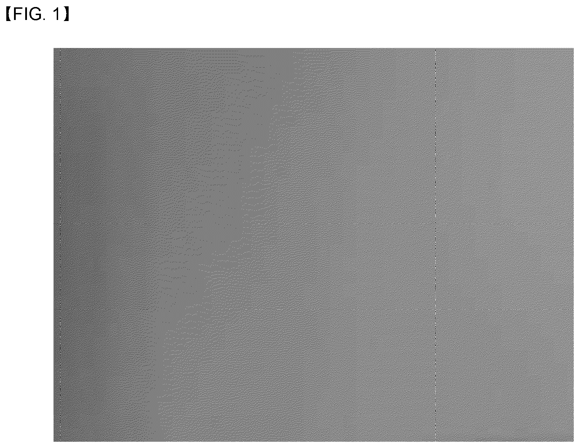

The surfaces of the coating layers in the electrodes prepared in Examples 1 and 2 and Comparative Examples 1 and 2 were photographed and shown in FIGS. 1 to 4.

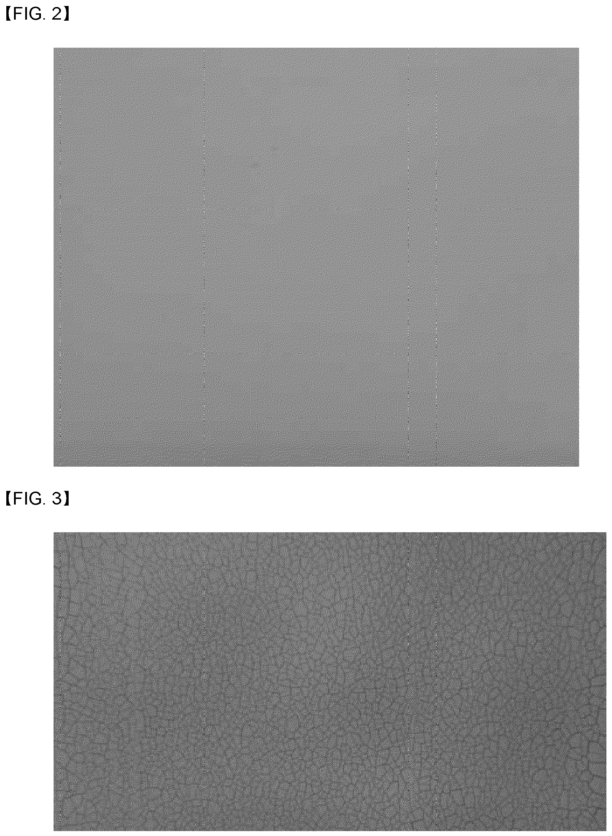

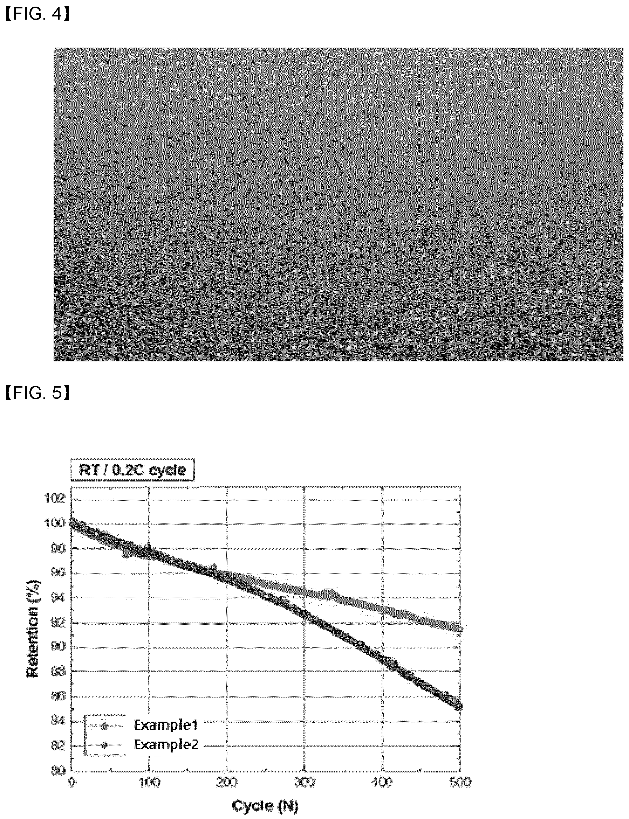

Specifically, FIG. 1 is a photograph of the surface of the coating layer in the electrode manufactured in Example 1, FIG. 2 is a photograph of the surface of the coating layer in the electrode manufactured in Example 2, FIG. 3 is a photograph of the surface of the coating layer in the electrode manufactured in Comparative Example 1, and FIG. 4 is a photograph of the surface of the coating layer in the electrode manufactured in Comparative Example 2.

Further, the surface of the coating layer was visually observed, and the presence or absence of cracks is shown in Table 1 below.
O: cracks exist on the surface of the coating layer
X: no cracks exist on the surface of the coating layer

**[Table 1]**

| | Presence or absence of cracks on the surface of the coating layer |
|---|---|
| Example 1 | X |
| Example 2 | X |
| Comparative Example 1 | O |
| Comparative Example 2 | O |

As shown in Table 1 and FIGS. 1 to 4, it can be confirmed that the coating layer contained in the electrode of Comparative Example 1 without using a dispersant (H-NBR) exhibits cracks on the surface, unlike the coating layers contained in the electrodes of Examples 1 and 2.

In addition, the coating layer contained in the electrode of Comparative Example 2 using polytetrafluoroethylene (PTFE) rather than polyvinylidene fluoride (PVDF) as a binder exhibits cracks on the surface, unlike the coating layer contained in the electrodes of Examples 1 and 2.

### Experimental Example 2 - Evaluation of Life Characteristic of Lithium Secondary Batteries

Each lithium secondary battery manufactured in Examples 1 and 2 was charged and discharged at 0.1C in a CC/CV charging mode with an upper limit voltage of 4.2V and a CC discharging mode with a lower limit voltage of 3V, and then charged and discharged in a voltage range of 4.2 V to 3 V at 0.2 C/0.2 C for 5 cycles. The capacity retention was measured at intervals of 100 cycles. The measurement results are shown in Table 2 and FIG. 5 below, respectively. FIG. 5 is a graph showing capacity retentions of the lithium secondary batteries including the electrodes manufactured in Examples 1 and 2, respectively.

**[Table 2]**

| | Capacity retention (%) | | | | |
|---|---|---|---|---|---|
| | 100 cycle | 200 cycle | 300 cycle | 400 cycle | 500 cycle |
| Example 1 | 97.4 | 95.9 | 94.5 | 93.1 | 91.5 |
| Example 2 | 97.6 | 95.5 | 92.7 | 89.1 | 85.1 |

As shown in Table 2 and FIG. 5, it was confirmed that both the lithium secondary batteries of Examples 1 and 2 exhibit excellent capacity retentions and life characteristics at 200 cycles or less.

Furthermore, it can be confirmed that Example 1, in which the content of the binder is 20 wt.% based on the total weight of the coating layer, exhibits more excellent battery capacity retention after 200 cycles, as compared to Example 2, in which the content of the binder is 30 wt.% based on the total weight of the coating layer.

### Experimental Example 3 - Evaluation of High Temperature Safety of Lithium Secondary Battery

A hot box test was carried out on each lithium secondary battery manufactured in Example 1 and Comparative Example 3, and the results are shown in Table 3 below. Specifically, the hot box test was carried out in such a way to raise the temperature at 5 °C/min from 25 °C, and hold the temperature at 100°C, 120°C, 140°C, 150°C, 160°C, 170°C, and 180°C for 30 minutes each, and then raise the temperature at 2°C/min up to 200°C. In this case, the ignition start temperature is shown in Table 3 below.

On the other hand, in the case of the lithium secondary batteries respectively manufactured from the negative electrodes of Comparative Examples 1 and 2, the high temperature stability evaluation was omitted because the charge/discharge performance was not exhibited from the initial stage of the cells.

**[Table 3]**

| | Ignition start temperature (°C) |
|---|---|
| Example 1 | 196 |
| Comparative Example 3 | 170 |

As shown in Table 3, it can be confirmed that in the case of a lithium secondary battery in which the negative electrode of Example 1 was applied instead without using the existing separator made of polyolefin material, the high-temperature safety is improved as compared to the lithium secondary battery using the negative electrode of Comparative Example 3 and the separator made of polyolefin material.

## Claims

1. An electrode comprising: an electrode active material layer and a coating layer formed on the electrode active material layer, wherein:
the coating layer includes polymer particles having an absolute value of zeta potential measured according to the description of 25 mV or more; a dispersant; and a binder,
the binder includes at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and
the binder is contained in an amount of 12 to 32 wt.% based on the total weight of the coating layer.

2. The electrode of claim 1, wherein:
the polymer particles are contained in an amount of 55% to 85 wt.% based on the total weight of the coating layer.

3. The electrode of claim 1, wherein:
the dispersant includes a hydrogenated nitrile-based polymer.

4. The electrode of claim 1, wherein:
the dispersant is contained in an amount of 3 wt.% to 20 wt.% based on the total weight of the coating layer.

5. The electrode of claim 1, wherein:
the polymer particles has an average particle size D₅₀ measured according to the description of 50 nm to 3 *µ*m.

6. The electrode of claim 1, wherein:
the polymer particles include at least one selected from the group consisting of polyethylene oxide (PEO), polyphenylene sulfide (PPS), polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate and polyethylene terephthalate.

7. The electrode of claim 1, wherein:
the coating layer has a thickness of 5 to 50 *µ*m and includes a plurality of pores having a diameter of 10 nm or more.

8. An electrode assembly comprising:
a first electrode;
a second electrode; and
a coating layer arranged between the first electrode and the second electrode,
wherein the coating layer includes polymer particles having an absolute value of zeta potential measured according to the description of 25 mV or more; a dispersant; and a binder,
wherein the binder includes at least one selected from the group consisting of polyvinylidenefluoride (PVDF), polyvinyl alcohol (PVA), starch, hydroxypropyl cellulose, regenerated cellulose, polyvinylpyrrolidone (PVP), polyethylene (PE), polypropylene, ethylene-propylene-diene polymer, and a sulfonated ethylene-propylene-diene polymer, and
wherein the binder is contained in an amount of 12 to 32 wt.% based on the total weight of the coating layer.

9. The electrode assembly of claim 8, wherein:
the polymer particles are contained in an amount of 55 wt.% to 85 wt.% based on the total weight of the coating layer.

10. The electrode assembly of claim 8, wherein:
the dispersant is contained in an amount of 3 wt.% to 20 wt.% based on the total weight of the coating layer.

11. The electrode assembly of claim 8, wherein:
the polymer particles has an average particle size D₅₀ measured according to the description of 50 nm to 3 *µ*m.

12. The electrode assembly of claim 8, wherein:
the polymer particles include at least one selected from the group consisting of polyethylene oxide (PEO), polyphenylene sulfide (PPS), polymethyl(meth)acrylate, polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate and polyethylene terephthalate.

13. The electrode assembly of claim 8, wherein:
the coating layer has thickness of 5 to 50 *µ*m and includes a plurality of pores having a a diameter of 10 nm or more.

14. The electrode assembly of claim 8, wherein:
the first electrode and the second electrode are in contact with the coating layer.

## Patentansprüche

1. Elektrode, umfassend: eine Elektrodenaktivmaterialschicht und eine auf der Elektrodenaktivmaterialschicht gebildete Beschichtungsschicht, wobei:
die Beschichtungsschicht Polymerteilchen mit einem gemäß der Beschreibung gemessenen Absolutwert des Zeta-Potentials von 25 mV oder mehr; ein Dispergiermittel; und ein Bindemittel umfasst,
das Bindemittel mindestens eines umfasst, das aus der Gruppe ausgewählt ist, die aus Polyvinylidenfluorid (PVDF), Polyvinylalkohol (PVA), Stärke, Hydroxypropylcellulose, regenerierter Cellulose, Polyvinylpyrrolidon (PVP), Polyethylen (PE), Polypropylen, Ethylen-Propylen-Dien-Polymer und einem sulfonierten Ethylen-Propylen-Dien-Polymer besteht, und
das Bindemittel in einer Menge von 12 bis 32 Gew.-%, bezogen auf das Gesamtgewicht der Beschichtungsschicht, enthalten ist.

2. Elektrode nach Anspruch 1, wobei:
die Polymerteilchen in einer Menge von 55 bis 85 Gew.-%, bezogen auf das Gesamtgewicht der Beschichtungsschicht, enthalten sind.

3. Elektrode nach Anspruch 1, wobei:
das Dispergiermittel ein hydriertes Polymer auf Nitrilbasis umfasst.

4. Elektrode nach Anspruch 1, wobei:
das Dispergiermittel in einer Menge von 3 bis 20 Gew.-%, bezogen auf das Gesamtgewicht der Beschichtungsschicht, enthalten ist.

5. Elektrode nach Anspruch 1, wobei:
die Polymerteilchen eine mittlere Teilchengröße D₅₀, gemessen gemäß der Beschreibung, von 50 nm bis 3 µm aufweisen.

6. Elektrode nach Anspruch 1, wobei:
die Polymerteilchen mindestens eines umfassen, das aus der Gruppe ausgewählt ist, die aus Polyethylenoxid (PEO), Polyphenylensulfid (PPS), Polymethyl(meth)acrylat, Polystyrol, Polyvinylchlorid, Polycarbonat, Polysulfon, Polyethersulfon, Polyetherimid, Polyphenylsulfon, Polyamidimid, Polyimid, Polybenzimidazol, Polyetherketon, Polyphthalamid, Polybutylenterephthalat und Polyethylenterephthalat besteht.

7. Elektrode nach Anspruch 1, wobei:
die Beschichtungsschicht eine Dicke von 5 bis 50 µm aufweist und eine Vielzahl von Poren mit einem Durchmesser von 10 nm oder mehr umfasst.

8. Elektrodenanordnung, umfassend:
eine erste Elektrode;
eine zweite Elektrode; und
eine zwischen der ersten Elektrode und der zweiten Elektrode angeordnete Beschichtungsschicht,
wobei die Beschichtungsschicht Polymerteilchen mit einem gemäß der Beschreibung gemessenen Absolutwert des Zeta-Potentials von 25 mV oder mehr; ein Dispergiermittel; und ein Bindemittel umfasst,
wobei das Bindemittel mindestens eines umfasst, das aus der Gruppe ausgewählt ist, die aus Polyvinylidenfluorid (PVDF), Polyvinylalkohol (PVA), Stärke, Hydroxypropylcellulose, regenerierter Cellulose, Polyvinylpyrrolidon (PVP), Polyethylen (PE), Polypropylen, Ethylen-Propylen-Dien-Polymer und einem sulfonierten Ethylen-Propylen-Dien-Polymer besteht, und
wobei das Bindemittel in einer Menge von 12 bis 32 Gew.-%, bezogen auf das Gesamtgewicht der Beschichtungsschicht, enthalten ist.

9. Elektrodenanordnung nach Anspruch 8, wobei:
die Polymerteilchen in einer Menge von 55 bis 85 Gew.-%, bezogen auf das Gesamtgewicht der Beschichtungsschicht, enthalten sind.

10. Elektrodenanordnung nach Anspruch 8, wobei:
das Dispergiermittel in einer Menge von 3 bis 20 Gew.-%, bezogen auf das Gesamtgewicht der Beschichtungsschicht, enthalten ist.

11. Elektrodenanordnung nach Anspruch 8, wobei:
die Polymerteilchen eine mittlere Teilchengröße D₅₀, gemessen gemäß der Beschreibung, von 50 nm bis 3 µm aufweisen.

12. Elektrodenanordnung nach Anspruch 8, wobei:
die Polymerteilchen mindestens eines umfassen, das aus der Gruppe ausgewählt ist, die aus Polyethylenoxid (PEO), Polyphenylensulfid (PPS), Polymethyl(meth)acrylat, Polystyrol, Polyvinylchlorid, Polycarbonat, Polysulfon, Polyethersulfon, Polyetherimid, Polyphenylsulfon, Polyamidimid, Polyimid, Polybenzimidazol, Polyetherketon, Polyphthalamid, Polybutylenterephthalat und Polyethylenterephthalat besteht.

13. Elektrodenanordnung nach Anspruch 8, wobei:
die Beschichtungsschicht eine Dicke von 5 bis 50 µm aufweist und eine Vielzahl von Poren mit einem Durchmesser von 10 nm oder mehr umfasst.

14. Elektrodenanordnung nach Anspruch 8, wobei:
die erste Elektrode und die zweite Elektrode mit der Beschichtungsschicht in Kontakt stehen.

## Revendications

1. Électrode comprenant : une couche de matériau actif d'électrode et une couche de revêtement formée sur la couche de matériau actif d'électrode, dans laquelle :
la couche de revêtement inclut des particules de polymère ayant une valeur absolue de potentiel zêta, mesurée selon la description, égale ou supérieure à 25 mV ; un dispersant ; et un liant,
le liant inclut un ou plusieurs éléments sélectionnés dans le groupe constitué de fluorure de polyvinylidène (PVDF), alcool polyvinylique (PVA), amidon, hydroxypropylcellulose, cellulose régénérée, polyvinylpyrrolidone (PVP), polyéthylène (PE), polypropylène, polymère éthylène-propylène-diène et un polymère éthylène-propylène-diène sulfoné, et
le liant est contenu dans une quantité de 12 à 32 % en poids sur la base du poids total de la couche de revêtement.

2. Électrode selon la revendication 1, dans laquelle :
les particules de polymère sont contenues dans une quantité de 55 % à 85 % en poids sur la base du poids total de la couche de revêtement.

3. Électrode selon la revendication 1, dans laquelle :
le dispersant inclut un polymère à base de nitrile hydrogéné.

4. Électrode selon la revendication 1, dans laquelle :
le dispersant est contenu dans une quantité de 3 % en poids à 20 % en poids sur la base du poids total de la couche de revêtement.

5. Électrode selon la revendication 1, dans laquelle :
les particules de polymère ont une taille de particule moyenne D₅₀ mesurée selon la description de 50 nm à 3 µm.

6. Électrode selon la revendication 1, dans laquelle :
les particules de polymère incluent un ou plusieurs éléments sélectionnés dans le groupe constitué d'oxyde de polyéthylène (PEO), sulfure de polyphénylène (PPS), méthacrylate de polyméthyle, polystyrène, chlorure de polyvinyle, polycarbonate, polysulfone, polyéthersulfone, polyétherimide, polyphénylsulfone, polyamideimide, polyimide, polybenzimidazole, polyéther cétone, polyphtalamide, téréphtalate de polybutylène et téréphtalate de polyéthylène.

7. Électrode selon la revendication 1, dans laquelle :
la couche de revêtement a une épaisseur de 5 à 50 µm et inclut une pluralité de pores ayant un diamètre égal ou supérieur à 10 nm.

8. Ensemble électrode comprenant :
une première électrode ;
une deuxième électrode ; et
une couche de revêtement agencée entre la première électrode et la deuxième électrode,
dans lequel la couche de revêtement inclut des particules de polymère ayant une valeur absolue de potentiel zêta, mesurée selon la description, égale ou supérieure à 25 mV ; un dispersant ; et un liant,
dans lequel le liant inclut un ou plusieurs éléments sélectionnés dans le groupe constitué de fluorure de polyvinylidène (PVDF), alcool polyvinylique (PVA), amidon, hydroxypropylcellulose, cellulose régénérée, polyvinylpyrrolidone (PVP), polyéthylène (PE), polypropylène, polymère éthylène-propylène-diène et un polymère éthylène-propylène-diène sulfoné, et
dans lequel le liant est contenu dans une quantité de 12 à 32 % en poids sur la base du poids total de la couche de revêtement.

9. Ensemble électrode selon la revendication 8, dans lequel :
les particules de polymère sont contenues dans une quantité de 55 % en poids à 85 % en poids sur la base du poids total de la couche de revêtement.

10. Ensemble électrode selon la revendication 8, dans lequel :
le dispersant est contenu dans une quantité de 3 % en poids à 20 % en poids sur la base du poids total de la couche de revêtement.

11. Ensemble électrode selon la revendication 8, dans lequel :
les particules de polymère ont une taille de particule moyenne D₅₀, mesurée selon la description, de 50 nm à 3 µm.

12. Ensemble électrode selon la revendication 8, dans lequel :
les particules de polymère incluent un ou plusieurs éléments sélectionnés dans le groupe constitué d'oxyde de polyéthylène (PEO), sulfure de polyphénylène (PPS), méthacrylate de polyméthyle, polystyrène, chlorure de polyvinyle, polycarbonate, polysulfone, polyéthersulfone, polyétherimide, polyphénylsulfone, polyamideimide, polyimide, polybenzimidazole, polyéther cétone, polyphtalamide, téréphtalate de polybutylène et téréphtalate de polyéthylène.

13. Ensemble électrode selon la revendication 8, dans lequel :
la couche de revêtement a une épaisseur de 5 à 50 µm et inclut une pluralité de pores ayant un diamètre égal ou supérieur à 10 nm.

14. Ensemble électrode selon la revendication 8, dans lequel :
la première électrode et la deuxième électrode sont en contact avec la couche de revêtement.
